# EUROPÄISCHE PATENTANMELDUNG

(11) **EP 4 220 022 A1**
(43) Veröffentlichungstag der Anmeldung: **02.08.2023**
(21) Anmeldenummer: 23156023.6
(22) Anmeldetag: 25.03.2011
(51) Int. Cl.: F24D 17/00, F24D 10/00

(54) **VERFAHREN ZUM ERWÄRMEN VON TRINKWASSER, HAUSTECHNIKSYSTEM, WOHNUNGSSTATION UND GEBÄUDE**

(30) Priorität: 25.03.2010 DE 102010012839
(62) Teilanmeldung aus: 18000505.0
(71) Anmelder: Uponor Innovation AB, 73061 Virsbo (SE)
(72) Erfinder: Habecker, Hartmut, 31303 Burgdorf (DE); Geck, Thomas, 30559 Hannover (DE)
(74) Vertreter: Epping - Hermann - Fischer

(57) **Zusammenfassung**

Es werden ein Verfahren und ein Haustechniksystem vorgeschlagen, welche sehr effizient Trinkwarmwasser für Wohnungen, Büros, Ladengeschäfte und Gebäudeeinheiten bereitstellen.

Die Erfindung basiert auf einer zweistufigen Erwärmung für das Trinkwasser, wobei zwei sich ergänzende Erwärmungsstufen unterschiedlichen Prinzips vorgesehen sind, nämlich eine mittels eines Wasser-Wasserwärmetauschers und eine mittels eines elektrischen Nachheizers.

## Beschreibung

Die Erfindung betriff ein Verfahren zum Erwärmen von Trinkwasser und Bereitstellen als Trinkwarmwasser, ein Haustechniksystem, eingerichtet zum Durchführen eines solchen Verfahrens, eine Wohnungsstation sowie ein Gebäude oder einen Mehrgebäudekomplex.

Trinkwasser kann in einem Gebäude je nach Ort und Jahreszeit mit einer Temperatur von meist zwischen 10 °C und 15 °C gezapft werden.

Um das kalte Trinkwasser zu Trinkwarmwasser zu erwärmen, sodass es Trinkwarmwassertemperatur hat, sind unterschiedliche Maßnahmen bekannt.

Außerdem sind im Rahmen von Gebäudetechnik zentrale Heizungsanlagen bekannt. Ausgehend von einer Zentralheizung führt ein Primärheizungsvorlauf zu den einzelnen Wohnungen. Dort wird das Heizungswasser aus dem Primärheizungsvorlauf in einer Primärheizungstemperatur genutzt, um einen Sekundärheizungsvorlauf zu speisen, also den Vorlauf durch die Heizkörper der Wohnung. Bei der Nutzung gibt das Heizungswasser Wärmeenergie ab und fließt in einer kühleren Primärheizungsrücklauftemperatur über den Primärheizungsrücklauf zurück zur Zentralheizung.

Der vorliegenden Erfindung liegt die Aufgabe zu Grunde, ein sehr effektives System zum Erwärmen von Trinkwasser zu entwickeln.

Nach einem ersten Aspekt der Erfindung löst diese Aufgabe ein Verfahren zum Erwärmen von Trinkwasser und Bereitstellen als Trinkwarmwasser mit einer Trinkwarmwassertemperatur in einer Wohnung, unter Nutzung eines Primärheizungsvorlaufs und eines Primärheizungsrücklaufs wobei Heizungswasser von einer Zentralheizung über den Primärheizungsvorlauf in einer Primärheizungsvorlauftemperatur zur Wohnung gefördert wird und nach Nutzung in einer kühleren Primärheizungsrücklauftemperatur über den Primärheizungsrücklauf zur Zentralheizung zurückgefördert wird, wobei die Nutzung des Heizungswasser und das Erwärmen des Trinkwassers in einer Wohnungsstation erfolgen, wobei in der Wohnungsstation zwei sich ergänzende Erwärmungsstufen unterschiedlichen Prinzips zum Erwärmen des Trinkwassers vorgesehen sind, nämlich eine mittels eines Wasser-Wasser-Wärmetauschers und eine mittels eines elektrischen Nachheizers.

Begriff sei zunächst erläutert, dass im Rahmen der hier vorliegenden Erfindung eine "Wohnung" nicht zwingend eine solche Gebäudeeinheit sein muss, welche tatsächlich zum Wohnen durch einen oder mehrere Menschen verwendet wird. Vielmehr sei als eine Wohnung eine Gebäudeeinheit verstanden, welche sich gegenüber einer zentralen Gebäudestruktur individuell abgrenzt. Es kann sich also um eine Wohnung handeln, aber genau so gut um ein Büro oder ein Ladengeschäft oder sogar um ein eigenständiges Gebäude, welches mit anderen Gebäudeteilen zu einem Mehrgebäudekomplex hinsichtlich der Haustechnik zusammengeschlossen ist.

Der Einfachheit halber wird im Rahmen der vorliegenden Beschreibung und Patentansprüche durchgehend von einer "Wohnung" gesprochen, ohne die übrigen Varianten jeweils mit aufzuzählen.

Als eine "Wohnungsstation" wird ein im Zusammenhang miteinander stehender Haustechnikinstallationsbereich bezeichnet, beispielsweise an einer hierfür vorgesehenen Stelle zum Zusammenführen der Installationen innerhalb einer Wohnung mit der Installation außerhalb der Wohnung zur Zentralheizung.

Bei mehreren Wohnungen werden in der Regel mehrere Wohnungsstationen vorhanden sein, nämlich pro Wohnung im Normalfall genau eine.

Der Erfinder hat erkannt, dass es bei einem Verfahren wie im ersten Aspekt der Erfindung vorgeschlagen, zu einem sehr effizienten Nutzen von Energie kommen kann. Aus variablen Bedingungen, beispielsweise aus gleitenden Heizungsvorlauftemperaturen, kann wegen des elektrischen Nachheizers immer zuverlässig die gewünschte Trinkwarmwassertemperatur bereitgestellt werden.

Auch kann mittels der elektrischen Nachheizung, vor allem bei einer Steuerung oder Regelung, wobei der Einfachheit halber im Rahmen der hier vorliegenden Anmeldung immer nur von einer "Steuerung" gesprochen wird, aber darunter beides verstanden werden soll, die möglicherweise ansonsten fehlende Energie bei zu geringen Heizungsvorlauftemperaturen vor allem in der Übergangszeit oder im Sommer beigesteuert werden.

Um das Trinkwasser auf Trinkwarmwassertemperatur zu erwärmen, ist es denkbar, dass als erste Erwärmungsstufe das Trinkwasser im Wasser-Wasser-Wärmetauscher teilerwärmt und als zweite Erwärmungsstufe sanitärseitig des Wasser-Wasser-Wärmetauschers das teilerwärmte Trinkwasser mittels des elektrischen Nachheizers auf Trinkwarmwassertemperatur resterwärmt wird.

Als "sanitärseitig" sei ein Teil der Haustechnikinstallation zu verstehen, welcher vom Wasser-Wasser-Wärmetauscher hin zur Wohnung gerichtet ist, also auf der anderen Seite von der Zentralheizung.

Alternativ ist es zum Erwärmen des Trinkwassers möglich, als erste Erwärmungsstufe vom Primärheizungsvorlauf stammendes Heizungswasser mittels des elektrischen Nachheizers nachzuheizen und als zweite Erwärmungsstufe sanitärseitig des elektrischen Nachheizers das Trinkwasser im Wasser-Wasser-Wärmetauscher mittels des nachgeheizten Heizungswassers auf Trinkwarmwassertemperatur zu erwärmen.

Weiter alternativ ist denkbar, das Trinkwasser zu erwärmen, indem als erste Erwärmungsstufe vom Primärheizungsvorlauf stammendes Heizungswasser mittels des elektrischen Nachheizers nachgeheizt wird, dann als zweite Erwärmungsstufe das Trinkwasser sanitärseitig des elektrischen Nachheizers im Wasser-Wasser-Wärmetauscher mittels des nachgeheizten Heizungswassers teilerwärmt wird und als dritte Erwärmungsstufe das teilerwärmte Trinkwasser sanitärseitig des Wasser-Wasser-Wärmetauschers mittels eines weiteren elektrischen Nachheizers auf Trinkwassertemperatur resterwärmt wird.

Ausdrücklich sei betont, dass im Rahmen der hier vorliegenden Anmeldung unbestimmte Zahlenangaben als "mindestens"-Angaben zu verstehen sind, sofern sich nicht im Einzelfall ergibt, dass "genau" diese Zahl gemeint ist. "Genau" die genannte Anzahl ist allerdings jeweils als eine bevorzugte Ausführung zu verstehen.

Beispielhaft hierfür fällt unter die im Hauptanspruch geforderte Anzahl zweier Erwärmungsstufen auch die hier nun vorgestellte Variante mit drei Erwärmungsstufen.

Die vorstehenden beispielhaften Ausführungsvarianten des ersten Erfindungsaspekts ermöglichen allesamt eine optimierte Energiezuführung von der Heizungsseite, um möglichst kalte Heizungsrücklauftemperaturen zu erzielen. Dies ist nicht nur deshalb von Vorteil, weil dann im Heizungsrücklauf wenig Wärmeenergie ungezielt abgegeben wird. Auch eine etwa vorhandene Wärmepumpe funktioniert besonders gut, wenn die Temperatur im Heizungsrücklauf möglichst niedrig ist.

Gleichzeitig kann die Energiezuführung von der Elektroseite zur Nachheizung optimiert werden, um möglichst nur diejenige Menge an Energie elektrisch nachzuheizen, welche wirklich benötigt wird, um die gewünschte Trinkwarmwassertemperatur zu erreichen.

In Folge dessen, dass ein elektrischer Nachheizer vorhanden ist, kann Energie zur Warmwasserbereitung ohne Vorlaufzeit zur Verfügung gestellt werden.

Bei sämtlichen vorgenannten Ausführungsvarianten und bei weiteren nicht ausdrücklich genannten Ausführungsvarianten der Erfindung gemäß dem Hauptanspruch kann Warmabwasser durch einen Rückgewinnungs-Wärmetauscher geführt werden, um Wärmeenergie aus dem Warmabwasser rückzugewinnen und mit der rückgewonnenen Wärmeenergie zum Erwärmen des Trinkwassers beizutragen, wobei das Warmabwasser insbesondere durch den genannten Wasser-Wasser-Wärmetauscher in der Wohnungsstation geführt werden kann.

Bei einer solchen Ausgestaltung des Verfahrens bzw. eines damit korrespondierenden Hautechniksystems wird die ansonsten ungenutzt abfließende Wärme zumindest zum Teil rückgewonnen und nochmals genutzt. Ein solches Verfahren ist vor allem dann sinnvoll anwendbar, wenn Warmabwasser aus einem Duschenabschluss oder einem Waschbeckenabfluss verwendet wird. Alternativ oder kumulativ können Waschmaschinen, Waschtrockner, Wasserabläufe von sich unter Sonneneinstrahlung aufheizenden Dächern oder Spülmaschinen usw. jeweils warmes Abwasser zur Wärmerückgewinnung bereitstellen.

Die Primärheizungsvorlauftemperatur kann bevorzugt zwischen etwa 38 °C und maximal etwa 60 °C gehalten werden, insbesondere konstant. Besonders gut kann das System allerdings mit gleitenden Primärheizungsvorlauftemperaturen umgehen. Diese können auch vor allem innerhalb des genannten Temperaturspektrums liegen.

Die Primärheizungsrücklauftemperatur liegt bevorzugt so niedrig wie möglich, vor allem zwischen 20 °C und 45 °C, insbesondere zwischen etwa 25 °C und etwa 35 °C, wobei die Primärheizungsrücklauftemperatur variabel sein kann. Das vorgeschlagene Verfahren und das damit korrespondierende Haustechniksystem sind so flexibel, dass sie ohne Weiteres mit einer variablen Primärheizungsrücklauftemperatur umgehen können. Es macht daher wenig Sinn, ein übermäßiges aufwendiges Regelsystem einzusetzen, um eine möglichst gleichmäßige Primärheizungsrücklauftemperatur zu erreichen.

Es wird vorgeschlagen, dass während des Durchführens des vorstehend beschriebenen Verfahrens eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.

Mit einer solchen Rückkopplung kann die Steuerung der Zentralheizung alle Werte so anpassen, wie sie sich aus den ermittelten Verbrauchs- und Zustandsgrößen am besten errechnen. Die Steuerung kann sich selbst zu einem Idealwert iterieren, weil sie die eingestellten Soll-Werte durch gemessene IstWerte abgleichen kann.

Außerdem lassen sich Trinkwarmwasser, Trinkaltwasser und Heizungsverbrauch einfach in einer zentralen Steuerung erfassen. Dies erleichtert die Abrechnung mit den Inhabern der einzelnen Wohnungsstationen.

Die dezentralen Stationen können mit der Heizzentrale mittels eines Datenaustauschers hinsichtlich der Verbräuche von Trinkwarmwasser, Trinkwasser, Heizungsvorlauftemperatur, Heizungsrücklauftemperatur, elektrische Nachheizung, Volumenströme usw. verknüpft sein.

Recht leicht lässt sich aus diesen Werten auch der Endenergieverbrauch für jede einzelne Wohnung ermitteln.

Insgesamt ermöglicht die Netzverbindung zur zentralen Heizungsanlage ein sich selbst adaptierendes Gebäude. Die Steuerungstechnik kann intelligent programmiert sein, so dass sie bei bestimmten gegebenen Konditionen vor allem hinsichtlich der Außentemperatur und der Jahreszeit hinzulernen kann. Außerdem kann die Steuerung bevorzugt auf Energiepreise zugreifen, beispielsweise für Öl- oder Gaspreise sowie beispielsweise für die aktuellen Einspeiseertragspreise für aus Solarzellen gewonnenem Strom ins Stromnetz.

Die Steuerung kann entscheiden, wie sie lokal regenerativ gewonnenen Strom oder lokal regenerativ gewonnenes Heißwasser erzeugt oder zuführt. Regenerative Technologien werden auf diese Weise in einer bislang nicht bekannten vorteilhaften Weise kombiniert.

Zu dem elektrischen Nachheizer kann modular ein weiterer Nachheizer in die Wohnungsstation geschaltet werden. Auf diese Weise können unterschiedliche Leistungsklassen für die Warmwasserbereitung modular erzeugt werden.

Wenn ein Stellmotor vor einem Regler eingesetzt wird, kann sehr gut auf einen hydraulischen Abgleich Einfluss genommen werden. Dies ermöglicht es, nur eine maximal vorgesehene Energiemenge in die Wohnung einspeisen zu lassen. Selbst wenn - wie im Falle von Privatwohnungen oft der Fall - ein Bewohner einen technisch Zuständigen, beispielsweise den Hausmeister, bittet, die Menge zu erhöhen, kann sich dieser nicht über die elektronische Regelung hinwegsetzen.

Dies gilt auch dann, wenn der Solarstromanteil ohnehin erhöht ist und ausreichend Energie zur Verfügung steht. Weil der Heizungsvorlauf in Folge der mehrstufigen Erwärmung des Trinkwassers niedrig sein kann, zum Beispiel mit 45 °C, kann ein recht hoher Solarstromanteil benutzt werden. Beispielsweise können von einem Solarkollektor recht regelmäßig Temperaturen um die 40 °C bereitgestellt werden.

Alternativ oder kumulativ zum vorstehend beschriebenen ersten Aspekt der Erfindung löst die gestellte Aufgabe gemäß einem zweiten Aspekt der Erfindung ein Verfahren zum Erwärmen von Trinkwasser und Bereitstellen als Trinkwarmwasser mit einer Trinkwarmwassertemperatur in einer Wohnung, wobei Warmabwasser unterhalb einer Zapfstelle für Trinkwarmwasser aufgenommen und abgeführt wird, wobei zwei sich ergänzende Erwärmungsstufen unterschiedlichen Prinzips zum Erwärmen des Trinkwasser vorgesehen sind, nämlich eine mittels eines Rückgewinnungs-Wärmetauschers und eine mittels eines elektrischen Nachheizers, wobei als erste Erwärmungsstufe das abgeführte Warmabwasser zur Nutzung durch den Rückgewinnungs-Wärmetauscher geführt wird, um Wärmeenergie aus dem Warmabwasser rückzugewinnen und mit der rückgewonnenen Wärmeenergie das Trinkwarmwasser teilzuerwärmen, woraufhin als zweite Erwärmungsstufe sanitärseitig des Rückgewinnungs-Wärmetauschers das teilerwärmte Trinkwasser mittels des elektrischen Nachheizers auf Trinkwarmwassertemperatur resterwärmt wird. Begrifflich sei hinsichtlich dieses Aspekts erläutert, dass hier anstelle des Heizungswassers oder zusätzlich zum Heizungswasser als Energiequelle aufgefangenes Warmabwasser unterhalb einer Zapfstelle verwendet wird, also beispielsweise Duschabwasser.

Bevorzugt werden beide Erwärmungsstufen in einer Wohnungsstation durchgeführt.

In einer bevorzugten Ausführungsvariante wird das Warmabwasser durch den im Rahmen des ersten Aspekts der Erfindung bereits beschriebenen Wasser-Wasser-Wärmetauschers in der Wohnungsstation geführt.

Es wird dann vorgeschlagen, dass das Warmabwasser einen Vorzug gegenüber anderweitiger Durchströmung erhält. Warmabwasser fällt nicht immer an. Wann immer es anfällt, kann der Zustrom von Heizungswasser daher reduziert oder gestoppt werden, so lange sich aus dem abgeführten Warmabwasser Energie rückgewinnen lässt.

Nach einem dritten Aspekt der Erfindung löst die gestellte Aufgabe ein Haustechniksystem, welches eingerichtet ist zum Durchführen eines vorstehend beschriebenen Verfahrens oder mehrerer der vorstehenden Verfahren und weiterer - mitunter auch einstufiger - Erwärmungsverfahren, wobei die Wohnungsstation wohnungsseitig oder heizungsseitig einer Übergabestelle in die Wohnung angeordnet sein kann.

In beiden Fällen kann die Wohnungsstation sehr kompakt ausgeführt werden und beispielsweise in einem bauseits vorhandenen Schacht untergebracht werden.
[01] Die Wohnungsstation kann von einem Gehäuse umgeben sein. Dies ist die bevorzugte Aufbauform. In diesem Fall können die Anschlüsse sehr gut gekennzeichnet sein, und das gesamte System kann auf sehr kompakte Weise eingebaut und gewartet werden.

An der Wohnungsstation kann eine Anschlussmöglichkeit für einen Sekundärheizkreis vorgesehen sein, insbesondere durch die Wohnung führend.

Es wird vorgeschlagen, dass eine lernfähige Steuerung im Haustechniksystem vorgesehen ist, bevorzugt ebenfalls innerhalb des Gehäuses.

Bei einem Haustechniksystem mit mehreren Wohnungen wird vorgeschlagen, dass eine Mehrzahl dezentraler Wohnungsstationen vorgesehen ist, bevorzugt jeweils eine Wohnungsstation pro Wohnung.

Gemäß einem vierten Aspekt der Erfindung löst die gestellte Aufgabe eine Wohnungsstation mit einem Gehäuse, einem Wasser-Wasser-Wärmetauscher, einem elektrischen Nachheizer, einem Regler und mit Anschlüssen, so dass das vorstehend beschriebene Haustechniksystem errichtet werden kann.

Gemäß einem fünften Aspekt der Erfindung löst die gestellte Aufgabe ein Wohn-, Büro- und/oder Geschäftsgebäude oder Mehrgebäudekomplex mit einem vorstehend beschrieben Haustechniksystem und/oder mit einer Mehrzahl an Wohnungsstationen wie vorstehend beschrieben, wobei die Wohnungen entweder einheitlich oder nicht-einheitlich als privat bewohnte Wohnungen, als Büros oder als Ladengeschäfte eingerichtet sein können.

Schließlich wird vorgeschlagen, ein Wohn-, Büro- und/oder Geschäftsgebäude oder einen Gebäudekomplex mit einem Haustechniksystem wie vorstehend beschrieben nachzurüsten, wobei eine bauseits vorhandene Zirkulationsleitung verwendet und zum Nachrüsten umfunktioniert wird.

Die Erfindung wird nachstehend anhand einiger Ausführungsbeispiele unter Bezugnahme auf die Zeichnung näher erläutert.

Dort zeigen
- Figur 1: eine Tabelle mit beispielhaften Werten,
- Figur 2: schematisch eine Wohnungsstation in einer ersten Variante,
- Figur 3: schematisch eine Wohnungsstation in einer zweiten Variante,
- Figur 4: schematisch eine Wohnungsstation in einer dritten Variante,
- Figur 5: schematisch eine Wohnungsstation in einer vierten Variante und
- Figur 6 a, 6 b: schematisch eine Wohnungsstation in einer fünften Variante mit einer kleinen Abwandlung.

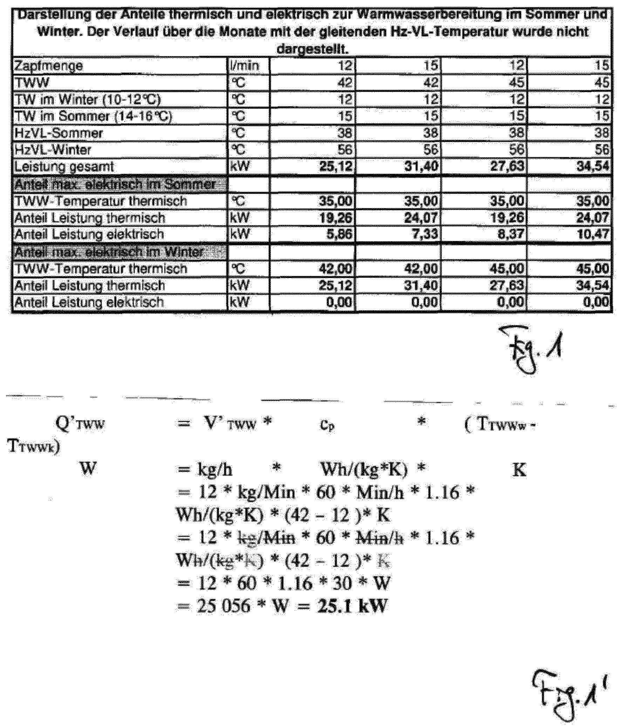

Die Tabelle in Figur 1 stellt die Anteile thermischer und elektrischer Anteile dar, welche zur Trinkwarmwasserbereitung im Sommer und im Winter verwendet werden können. Ein Verlauf über die Monate mit der gleitenden Heizungsvorlauftemperatur wurde nicht berücksichtigt, um die Darstellung einfacher zu gestalten.

Die erste Spalte beschreibt den Zeileninhalt. Die zweite Spalte beschreibt die Einheiten.

In der 3. und 5. Spalte ist jeweils eine geringe Zapfmenge angefordert, nämlich beispielsweise 12 l/min. In der 4. und 6. Spalte hingegen ist eine höhere Zapfmenge angefordert, nämlich 15 l/min.

In der 3. und 4. Spalte soll das Trinkwarmwasser auf 42 °C erhitzt werden, in der 5. und 6. Spalte hingegen auf 45 °C.

Der Heizungsvorlauf im Sommer wurde jeweils mit 38 °C angenommen, der Heizungsvorlauf im Winter mit 56 °C.

Rechnerisch ergibt sich bei der Erfindung, dass im Winter nicht elektrisch nachgeheizt werden muss, weil der Primärheizungsvorlauf mit 56 °C im Winter recht warm eingestellt ist. Dies gilt sogar, obwohl eine recht hohe Trinkwarmwassertemperatur verlangt wird.

Im Sommer hingegen wird die recht niedrige Trinkwarmwassertemperatur von 35 °C mit der zweistufigen Erwärmung erreicht. Es wird elektrisch nachgeheizt.

Das Haustechniksystem ist sowohl zum Trinkwassererwärmen mit einer Stufe als auch zum Trinkwassererwärmen mit zwei Stufen eingerichtet. Die Regelung schaltet die Erwärmungsstufen je nach Bedarf.

Die unterste angestrebte Puffertemperatur sollte zwischen 20 °C und 35 °C liegen. Dieser Wert ist zuverlässig normalerweise nur im Sommer zu erreichen. Mit steigender Heizlastanforderung ist die Rücklauftemperatur maßgeblich von der Auslegung der Heizflächen abhängig. Viel mehr, der hydraulische Abgleich ist optimal durchführbar und über die Hybrid-Wohnungsstation zu überwachen und gegebenenfalls über einen Stellantrieb zu schließen.

Eine möglichst gute Wärmedämmung der Vorlaufleitung sollte vorgesehen sein, um eine unerwünschte Auskühlung zu verhindern.

Ein beispielhafter Berechnungsweg zum Ermitteln der Tabelle in Figur 1 wird als Figur 1' beigefügt.

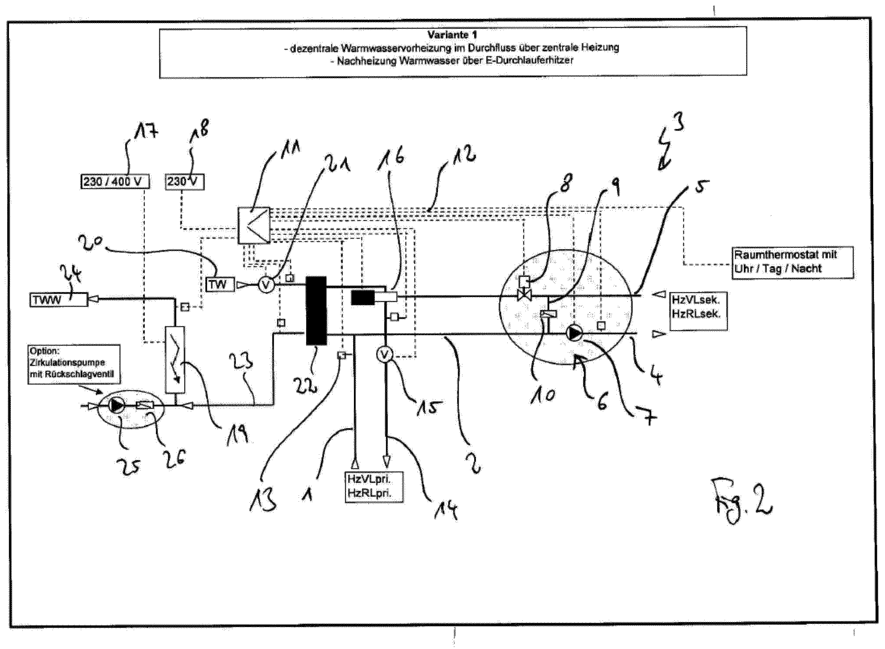

Bei der in Figur 2 schematisch dargestellten Wohnungsstation ist in einem Gehäuse (nicht dargestellt) eine Mehrzahl Anschlüsse vorhanden.

Ein Primärheizungsvorlauf 1 führt zu einer Verteilerleitung 2 innerhalb der Wohnungsstation 3. Diese führt einerseits zu einem Sekundärheizungsvorlauf 4, welcher über einen Sekundärheizungsrücklauf 5 wieder benutztes Heizungswasser in die Wohnungsstation 3 einspeisen kann.

Der sekundäre Heizkreis ist optional anschließbar. Er ist als ein Einspritzkreis 6 ausgeführt und weist eine Pumpe 7, ein Zwei-Wege-Ventil 8 und einen Bypass 9 mit Rückschlagventil 10 auf.

An einen elektrischen Regler 11 sind alle regelbaren Komponenten der Wohnungsstation 3 und alle Sensoren über elektrische Kabel 12 (exemplarisch gekennzeichnet) angeschlossen.

Unter anderem im Zulauf vom Primärheizungsvorlauf 1 zur Wohnungsstation 3 sind Temperaturfühler 13 (exemplarisch gekennzeichnet) angeordnet.

Im Primärheizungsrücklauf 14 ist ein Volumenstromzähler 15 angeordnet.

Der Zustrom zum Primärheizungsrücklauf 14 wird von einem Drei-Wege-Ventil 16 bestimmt.

Eine Spannungsquelle (17, 18) ist einerseits an den Regler 11 angeschlossen, andererseits an einen elektrischen Durchlauferhitzer 19.

Eine Trinkwasserquelle 20 führt entlang eines Volumenstromzählers oder Strömungsschalters 21 zu einem Wärmetauscher 22.

Von dort aus führt eine Leitung 23 für teilerwärmtes Trinkwasser durch den elektrischen Durchlauferhitzer 19 hindurch zu einer Trinkwarmwasser-Zapfstelle 24.

Optional ist eine Zirkulationspumpe 25 mit einem Rückschlagventil 26 angeschlossen.

Im Betrieb der Wohnungsstation 3 wird eine dezentrale Warmwasservorheizung im Durchfluss über die zentrale Heizung und das vom Primärheizungsvorlauf 1 stammende Heizungswasser im Wasser-Wasser-Wärmetauscher 22 erreicht. Das hierdurch benutzte und abgekühlte Heizungswasser fließt anschließend - geregelt durch das Drei-Wege-Ventil 16 - zurück zum Primärheizungsrücklauf 14.

Hierzu wird bei angeschlossenem Sekundärheizkreis das Wasser vom Sekundärheizungsrücklauf 5 gespeist.

Das kalte Trinkwasser von der Trinkwasserquelle 20 wird im Wasser-Wasser-Wärmetauscher 22 somit teilerwärmt und wird anschließend durch die Leitung 23 für das teilerwärmte Trinkwasser durch den elektrischen Durchlauferhitzer 19 geführt. Dort kann es elektrisch resterwärmt werden und sodann an der Zapfstelle 24 für Trinkwarmwasser in der gewünschten Temperatur entnommen werden.

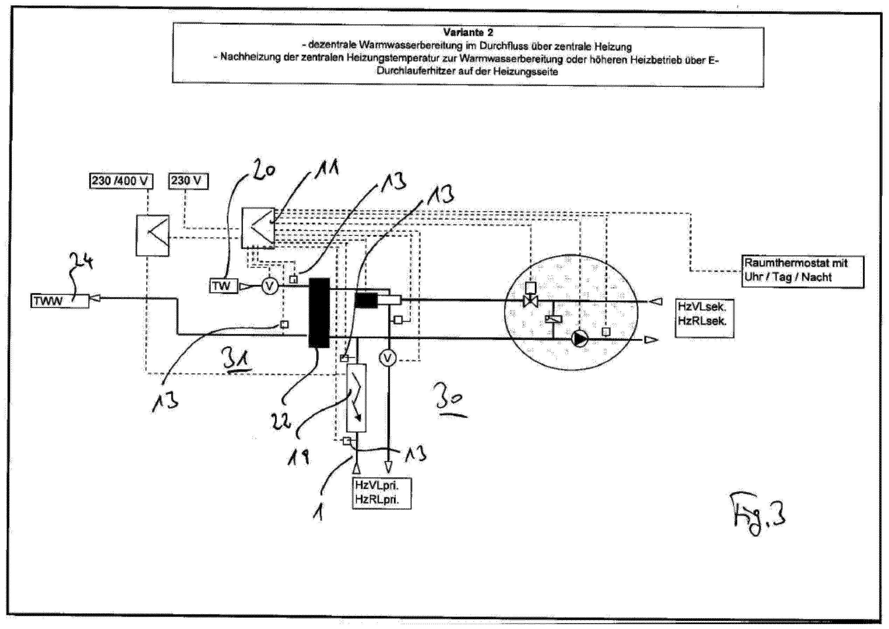

Bei der in Figur 3 dargestellten zweiten Variante findet eine dezentrale Warmwasserbereitung im Durchfluss über die zentrale Heizung statt. Eine Nachheizung der zentralen Heizungstemperatur zur Warmwasserbereitung oder zum höheren Heizbetrieb findet über einen elektrischen Durchlauferhitzer 19 auf der Heizungsseite 30 des Wasser-Wasser-Wärmetauschers 22 statt. Auf einer Wohnungsseite 31 des Wasser-Wasser-Wärmetauschers 22 wird bei der zweiten Ausführungsvariante nicht mehr elektrisch nachgeheizt. Vielmehr wird das Heizungswasser im Primärheizungsvorlauf 1 durch den dort angeordneten elektrischen Durchlauferhitzer 19, der dann als elektrischer Nachheizer fungiert, auf eine so hohe Temperatur gebracht, dass die Wärmeübergangsleistung im Wasser-Wasser-Wärmetauscher 22 bereits ausreicht, um das kalte Trinkwasser von der Trinkwasserquelle 20 ohne weiteres elektrisches Nachheizen zur gewünschten Temperatur an der Zapfstelle 24 für Trinkwarmwasser zu erwärmen.

Die Temperaturerhöhung im Primärheizungsvorlauf 1 wird mit zwei Temperaturfühlern 13 (in allen Figuren nur exemplarisch beziffert) nachvollzogen. Bei Bedarf wird der elektrische Durchlauferhitzer 19 höher oder niedriger geregelt.

Der Regler 11 kennt die Temperatur des Trinkwassers außerdem über dort angeordnete Temperaturfühler 13 sowohl vor dem Wasser-Wasser-Wärmetauscher 22 als auch danach, also im direkten Zulauf zur Zapfstelle 24.

Der Durchlauferhitzer 19 kann ebenso zum Erreichen einer höheren Sekundärvorlauftemperatur in der Wohnung eingesetzt werden, wenn dort höhere Raumtemperaturen erreicht werden sollen als mit der vorgegebenen Primärvorlauftemperatur erreichbar wären.

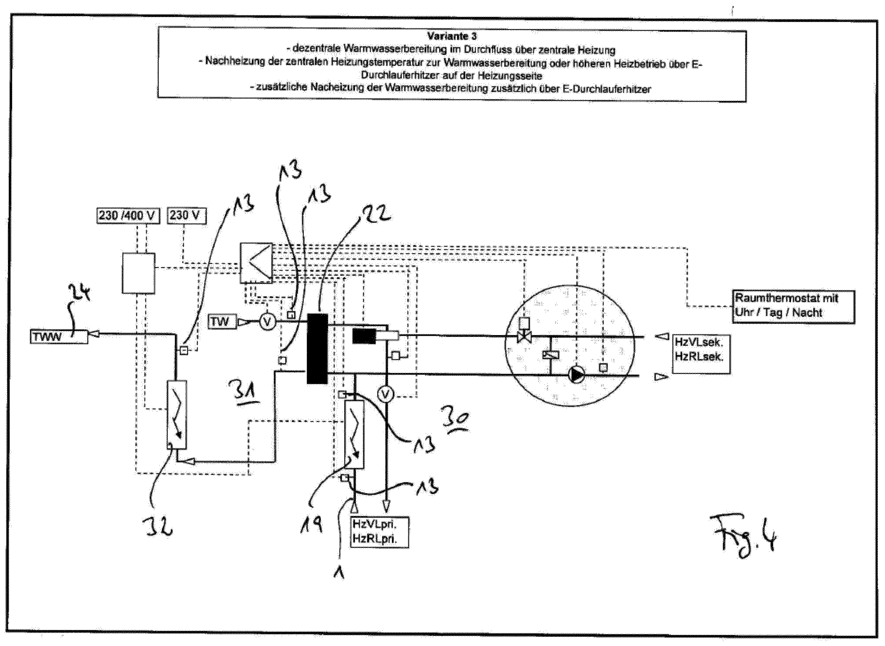

Die in Figur 4 dargestellte dritte Variante der Wohnungsstation bewirkt ebenfalls eine dezentrale Warmwasserbereitung im Durchfluss über eine zentrale Heizung. Die Nachheizung der zentralen Heizungstemperatur zur Warmwasserbereitung oder zum höheren Heizbetrieb erfolgt über einen elektrischen Durchlauferhitzer 19 auf der Heizungsseite 30. Zusätzlich wird auf der Wohnungsseite 31 mit einem ergänzenden elektrischen Durchlauferhitzer 32 das teilerwärmte Trinkwasser auf dem Weg vom Wasser-Wasser-Wärmetauscher 22 zur Zapfstelle 24 für Trinkwarmwasser noch resterwärmt.

Auch hier werden die Temperaturen im Primärleitungsvorlauf 1 vor und nach dem ersten elektrischen Durchlauferhitzer 19 sowie die Temperaturen im Trinkwasser vor dem Wasser-Wasser-Wärmetauscher 22, nach dem Wasser-Wasser-Wärmetauscher 22 und nach dem zusätzlichen, ergänzenden Durchlauferhitzer 32 gemessen, also auf dem Weg direkt zur Zapfstelle 24.

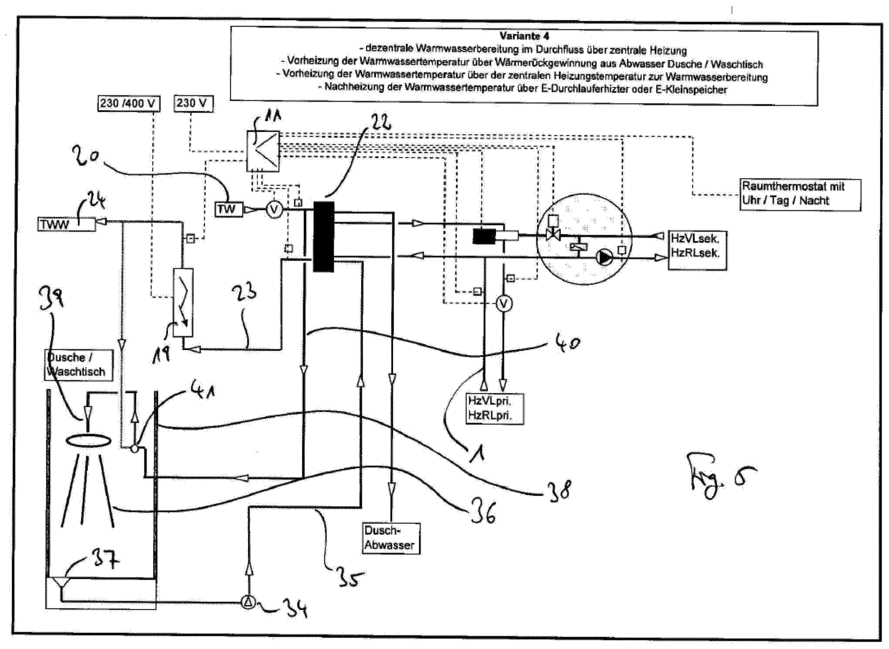

Die vierte Variante der Wohnungsstation in Figur 5 bewirkt ebenfalls eine dezentrale Warmwasserbereitung im Durchfluss über eine zentrale Heizung. Eine Vorheizung der Warmwassertemperatur erfolgt über Wärmerückgewinnung aus Abwasser von einer Dusche oder beispielsweise einem Waschtisch. Außerdem erfolgt eine Vorheizung der Warmwassertemperatur über die zentrale Heizungstemperatur. Schließlich wird elektrisch über einen Durchlauferhitzer oder einen Elektrokleinspeicher die Warmwassertemperatur nachgeheizt.

Im ersten Erwärmungsschritt wird das von der Trinkwasserquelle 20 stammende kalte Trinkwasser im Wasser-Wasser-Wärmetauscher 22 teilerwärmt. Der Wasser-Wasser-Wärmetauscher 22 wird einerseits vom Primärheizungsvorlauf 1 gespeist, andererseits über eine Rückgewinnungspumpe 34 und eine Rückführleitung 35 zusätzlich von bereits gezapftem Warmabwasser 36, welches an einer Sammelstelle 37 an einer Dusche oder einem Waschtisch 38 unterhalb einer Rückgewinnungszapfstelle 39 aufgenommen wird.

Wann immer die Rückgewinnungspumpe 34 Warmabwasser 36 über die Rückgewinnungsleitung 35 am Wasser-Wasser-Wärmetauscher zur Verfügung stellen kann, lässt der Regler 11 bevorzugt das Warmabwasser 36 durch den Wasser-Wasser-Wärmetauscher 22.

In der Leitung 23 für teilerwärmtes Trinkwasser wird dieses sodann durch den elektrischen Durchlauferhitzer 19 oder eine dort vorgesehene Anlage für einen elektrischen Kleinspeicher zur Zapfstelle 24 für Trinkwarmwasser und/oder zur Rückgewinnungszapfstelle 39 geführt.

Über eine Beimischleitung 40 kann kaltes Trinkwasser kurz vor einer Rückgewinnungszapfstelle 39 beigemischt werden, wenn dies gewünscht ist. Dies wird beispielsweise bei Duschen oder Waschtischen mittels einer dortigen Armatur 41 der Fall sein.

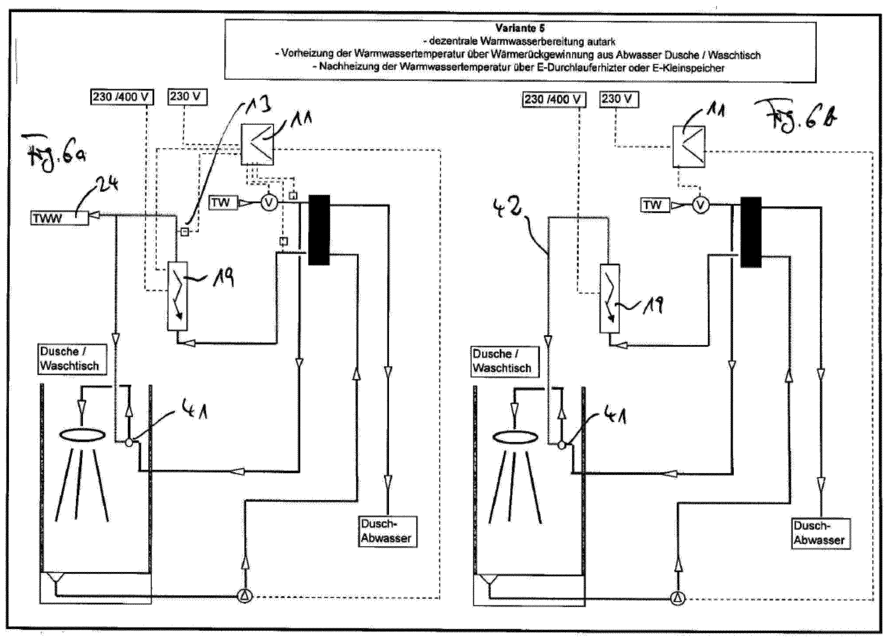

Bei der fünften Variante einer Wohnungsstation in den Figuren 6a und 6b erfolgt eine dezentrale Warmwasserbereitung autark. Eine Vorheizung der Warmwassertemperatur erfolgt über eine Wärmerückgewinnung aus Warmabwasser von einer Dusche oder beispielsweise einem Waschtisch. Eine Nachheizung der Warmwassertemperatur erfolgt über einen elektrischen Durchlauferhitzer oder einen elektrischen Kleinspeicher.

Wenn vom elektrischen Durchlauferhitzer 19 oder dem dortigen Kleinspeicher Wasser ohne eine vorherige Armatur 41 zur Zapfstelle 24 für Trinkwarmwasser geleitet wird, sind relativ viele Temperatursensoren 13 vorhanden, insbesondere auf direktem Weg vom Durchlauferhitzer 19 zur Zapfstelle 24 für Trinkwarmwasser.

Sofern - wie in Figur 6b dargestellt - das resterwärmte Trinkwasser 42 nach dem elektrischen Durchlauferhitzer 19 noch durch eine Armatur 41 geführt wird, kann auf diese Temperaturfühler verzichtet werden.

Ein elektrisch geregelter Wärmetauscher - oder generell der Nacherhitzer - kann außerdem gleich gezielt auf die gewünschte Temperatur heizen.

Es kann sogar auf eine Regelung des Durchlauferhitzers 19 oder des dortigen Kleinspeichers durch den Regler 11 verzichtet werden.

Übergreifend über die Beispiele lässt sich mit anderen Worten Folgendes erläutern:
Das Trinkkaltwasser wird bei den Varianten 1 bis 4 vorgewärmt oder auf die entsprechende Warmwassertemperatur direkt erwärmt.

Wenn die von der Heizzentrale zur Verfügung gestellte Heiztemperatur nicht ausreicht, wird entweder das Heizungswasser in der dezentralen Wohnungsstation über einen elektrischen Durchlauferhitzer auf der Heizungsseite auf die erforderliche Temperatur erhöht, um dann die gewünschte Warmwassertemperatur zu erreichen, oder es wird nur so viel übertragen, dass der Rest an benötigter Energie von dem elektrischen Durchlauferhitzer auf der Sanitärseite nachgeheizt wird, oder es kann sein, dass - wie beispielsweise in Variante 4 - das Abwasser von Dusche, Waschtisch oder ähnlichem vorgewärmt wird, geregelt wird und nachgeheizt wird über die zentrale Heizungsanlage, und nur noch der verbleibende Rest über den sanitärseitigen elektrischen Durchlauferhitzer.

Das Abwasser sollte bei einer solchen Konstellation immer Vorrang haben, weil möglichst viel Wärme zurück gewonnen werden sollte.

Erst dann wird die Heizung zum Nachheizen verwendet.

Schließlich wird der elektrische Durchlauferhitzer eingesetzt.

Wenn gemäß Variante 5 autark gearbeitet werden soll, dann muss immer Energie über den elektrischen Durchlauferhitzer oder den elektrischen Kleinspeicher eingespeist werden, um ein ausreichend erwärmtes Abwasser zu haben. Hierbei kann die investierte Wärme zu etwa 70 % bis
80 % zurück gewonnen werden.

Alle Systeme können über einen elektronischen Regler ausgeführt werden, zum Teil aber auch mechanisch. Die Varianten 1, 2 und 3 können auf ein elektronisch gesteuertes Ventil verzichten und beispielsweise über einen mechanischen Regler betrieben werden, welcher bei Warmwasseranforderung Heißwasser durch einen Wärmetauscher passieren lässt. Ein beispielhafter Regler ist der DE 20 2008 006 054 U1 zu entnehmen.

Die Warmhaltefunktion bei mechanischen Varianten erfolgt im Sommer bevorzugt über ein zeitliches pulsierendes Bypass-Ventil, damit immer bis zur Wohnungsstation Heizungswärme vorgehalten wird und damit immer sofort Energie zur Warmwasserbereitung zur Verfügung steht.

Weitere Ausführungsformen und Aspekte der vorliegenden Erfindung sind im Folgenden aufgelistet:
Beispiel 1: Verfahren zum Erwärmen von Trinkwasser und Bereitstellen als Trinkwarmwasser mit einer Trinkwarmwassertemperatur in einer Wohnung,
   unter Nutzung eines Primärheizungsvor- und -rücklaufs,
   wobei Heizungswasser
      von einer Zentralheizung über den Primärheizungsvorlauf in einer Primärheizungsvorlauftemperatur zur Wohnung gefördert wird und
      nach Nutzung in einer kühleren Primärheizungsrücklauftemperatur über den Primärheizungsrücklauf zur Zentralheizung zurückgefördert wird,
   wobei die Nutzung des Heizungswassers und das Erwärmen des Trinkwassers in einer Wohnungsstation erfolgen,
   wobei in der Wohnungsstation zwei sich ergänzende Erwärmungsstufen unterschiedlichen Prinzips zum Erwärmen des Trinkwassers vorgesehen sind, nämlich eine mittels eines Wasser-Wasser-Wärmetauschers und eine mittels eines elektrischen Nachheizers.
Beispiel 2: Verfahren nach Beispiel 1, wobei
   als erste Erwärmungsstufe das Trinkwasser im Wasser-Wasser-Wärmetauscher teilerwärmt und
   als zweite Erwärmungsstufe sanitärseitig des Wasser-Wasser-Wärmetauschers das teilerwärmte Trinkwasser mittels des elektrischen Nachheizers auf Trinkwarmwassertemperatur resterwärmt wird;
Beispiel 3: Verfahren nach Beispiel 1, wobei
   als erste Erwärmungsstufe vom Primärheizungsvorlauf stammendes Heizungswasser mittels des elektrischen Nachheizers nachgeheizt und
   als zweite Erwärmungsstufe sanitärseitig des elektrischen Nachheizers das Trinkwasser im Wasser-Wasser-Wärmetauscher mittels des nachgeheizten Heizungswassers auf Trinkwarmwassertemperatur erwärmt wird;
Beispiel 4: Verfahren nach Beispiel 1, wobei
   als erste Erwärmungsstufe vom Primärheizungsvorlauf stammendes Heizungswasser mittels des elektrischen Nachheizers nachgeheizt wird und
   als zweite Erwärmungsstufe das Trinkwasser sanitärseitig des elektrischen Nachheizers im Wasser-Wasser-Wärmetauscher mittels des nachgeheizten Heizungswassers teilerwärmt wird und
   als dritte Erwärmungsstufe das teilerwärmte Trinkwasser sanitärseitig des Wasser-Wasser-Wärmetauschers mittels eines weiteren elektrischen Nachheizers auf Trinkwarmwassertemperatur resterwärmt wird.
Beispiel 5: Verfahren nach einem der vorstehenden Beispiele, wobei Warmabwasser durch einen Rückgewinnungs-Wärmetauscher geführt wird, um Wärmeenergie aus dem Warmabwasser rückzugewinnen und mit der rückgewonnenen Wärmeenergie zum Erwärmen des Trinkwassers beizutragen, wobei das Warmabwasser insbesondere durch den genannten Wasser-Wasser-Wärmetauscher in der Wohnungsstation geführt werden kann.
Beispiel 6: Verfahren nach einem der vorstehenden Beispiele, wobei eine Primärheizungsvorlauftemperatur zwischen 38 °C und maximal 60 °C gehalten wird, insbesondere gleitend.
Beispiel 7: Verfahren nach einem der vorstehenden Beispiele, wobei eine Primärheizungsrücklauftemperatur zwischen 25 °C und maximal 45 °C gehalten wird, insbesondere variabel.
Beispiel 8: Verfahren nach einem der vorstehenden Beispiele, wobei eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.
Beispiel 9: Verfahren nach Beispiel 8, wobei die Zentralheizung anhand der übermittelten Verbrauchs- und Zustandsgrößen gesteuert wird.
Beispiel 10: Verfahren nach einem der vorstehenden Beispiele, wobei zum elektrischen Nachheizer modular ein weiterer Nachheizer in die Wohnungsstation geschaltet wird.
Beispiel 11: Verfahren nach einem der vorstehenden Beispiele, wobei ein Stellmotor vor einem Regler eingesetzt wird, um auf einen hydraulischen Abgleich Einfluss zu nehmen und nur eine maximal vorgesehene Energiemenge in die Wohnung einspeisen zu lassen.
Beispiel 12: Verfahren zum Erwärmen von Trinkwasser und Bereitstellen als Trinkwarmwasser mit einer Trinkwarmwassertemperatur in einer Wohnung, wobei Warmabwasser unterhalb einer Zapfstelle für Trinkwarmwasser aufgenommen und abgeführt wird,
   insbesondere nach einem der vorstehenden Beispiele,
   wobei zwei sich ergänzende Erwärmungsstufen unterschiedlichen Prinzips zum Erwärmen des Trinkwassers vorgesehen sind, nämlich eine mittels eines Rückgewinn-Wärmetauschers und eine mittels eines elektrischen Nachheizers, wobei
      als erste Erwärmungsstufe das abgeführte Warmabwasser zur Nutzung durch den Rückgewinnungs-Wärmetauscher geführt wird, um Wärmeenergie aus dem Warmabwasser rückzugewinnen und mit der rückgewonnenen Wärmeenergie das Trinkwasser teilzuerwärmen, und
      als zweite Erwärmungsstufe sanitärseitig des Rückgewinnungs-Wärmetauschers das teilerwärmte Trinkwasser mittels des elektrischen Nachheizers auf Trinkwarmwassertemperatur resterwärmt wird;
   wobei beide Erwärmungsstufen in einer Wohnungsstation durchgeführt werden können, und/oder
   wobei das Warmabwasser insbesondere durch den genannten Wasser-Wasser-Wärmetauscher in der Wohnungsstation geführt werden kann, insbesondere mit Vorzug gegenüber anderweitiger Durchströmung.
Beispiel 13: Haustechniksystem, eingerichtet zum Durchführen eines Verfahrens nach einem oder mehreren der Beispiele 1 bis 12, wobei die Wohnungsstation wohnungsseitig einer Übergabestelle in die Wohnung angeordnet ist.
Beispiel 14: Haustechniksystem, eingerichtet zum Durchführen eines Verfahrens nach einem oder mehreren der Beispiele 1 bis 12, wobei die Wohnungsstation heizungsseitig einer Übergabestelle in die Wohnung angeordnet ist.
Beispiel 15: Haustechniksystem nach Beispiel 13 oder 14, wobei die Wohnungsstation von einem Gehäuse umgeben ist.
Beispiel 16: Haustechniksystem nach einem der Beispiele 13 bis 15, wobei eine lernfähige Steuerung vorgesehen ist.
Beispiel 17: Haustechniksystem nach einem der Beispiele 13 bis 16, wobei eine Mehrzahl dezentraler Wohnungsstationen für eine Mehrzahl Wohnungen vorgesehen ist.
Beispiel 18: Wohnungsstation mit einem Gehäuse, einem Wasser-Wasser-Wärmetauscher, einem elektrischen Nachheizer, einem Regler und Anschlüssen, zum Errichten eines Haustechniksystems nach einem der Beispiele 13 bis 17.
Beispiel 19: Wohn-, Büro- und/oder Geschäftsgebäude oder Mehrgebäudekomplex mit einem Haustechniksystem nach einem der Beispiele 13 bis 17 und/oder mit einer Mehrzahl Wohnungsstationen nach Beispiel 18, wobei die Wohnungen einheitlich oder nicht-einheitlich als Wohn-Wohnungen, als Büros oder als Ladengeschäfte eingerichtet sind.
Beispiel 20: Verfahren zum Nachrüsten eines Wohn-, Büround/oder Geschäftsgebäudes oder Gebäudekomplexes mit einem Haustechniksystem nach einem der Beispiele 13 bis 17, wobei eine bauseits vorhandene Zirkulationsleitung verwendet und umfunktioniert wird.

### Bezugszeichenliste:

- 1: Primärheizungsvorlauf
- 2: Verteilerleitung
- 3: Wohnungsstation
- 4: Sekundärheizungsvorlauf
- 5: Sekundärheizungsrücklauf
- 6: Einspritzkreis
- 7: Pumpe
- 8: Zwei-Wege-Ventil
- 9: Bypass
- 10: Rückschlagventil
- 11: Regler
- 12: elektrische Kabel
- 13: Temperaturfühler
- 14: Primärheizungsrücklauf
- 15: Volumenstromzähler
- 16: Drei-Wege-Ventil
- 17, 18: Spannungsquelle
- 19: Durchlauferhitzer
- 20: Trinkwasserquelle
- 21: Strömungsschalter
- 22: Wärmetauscher
- 23: Leitung
- 24: Trinkwarmwasser-Zapfstelle
- 25: Zirkulationspumpe
- 26: Rückschlagventil
- 30: Heizungsseite
- 31: Wohnungsseite
- 32: Durchlauferhitzer
- 34: Rückgewinnungspumpe
- 35: Rückführleitung
- 36: Warmabwasser
- 37: Sammelstelle
- 38: Dusche oder einem Waschtisch
- 39: Rückgewinnungszapfstelle
- 40: Beimischleitung
- 41: Armatur
- 42: resterwärmtes Trinkwasser

## Patentansprüche

1. Verfahren zum Erwärmen von Trinkwasser und Bereitstellen als Trinkwarmwasser mit einer Trinkwarmwassertemperatur in einer Wohnung,
unter Nutzung eines Primärheizungsvor- und -rücklaufs (1, 14),
wobei Heizungswasser
von einer Zentralheizung über den Primärheizungsvorlauf (1) in einer Primärheizungsvorlauftemperatur zur Wohnung gefördert wird und
nach Nutzung in einer kühleren Primärheizungsrücklauftemperatur über den Primärheizungsrücklauf (14) zur Zentralheizung zurückgefördert wird,
wobei die Nutzung des Heizungswassers und das Erwärmen des Trinkwassers auf die Trinkwassertemperatur in einer Wohnungsstation (3) erfolgen, die einen Wasser-Wasser-Wärmetauscher (22) und einen elektrischen Nachheizer, insbesondere einen Durchlauferhitzer (19, 32), aufweist, wobei in der Wohnungsstation (3) zwei sich ergänzende Erwärmungsstufen unterschiedlichen Prinzips zum Erwärmen des Trinkwassers und eine Anschlussmöglichkeit eines Heizkreises vorgesehen sind,
wobei in einer ersten Erwärmungsstufe das Trinkwasser im Wasser-Wasser-Wärmetauscher (22) teilerwärmt und wobei in einer zweiten Erwärmungsstufe sanitärseitig des Wasser-Wasser-Wärmetauschers (22) das teilerwärmte Trinkwasser mittels des elektrischen Nachheizers auf Trinkwarmwassertemperatur resterwärmt wird.

2. Verfahren nach Anspruch 1, wobei
die Wohnungsstation (3) einen weiteren elektrischen Nachheizer, insbesondere Durchlauferhitzer (19), aufweist,
in einer weiteren Erwärmungsstufe vom Primärheizungsvorlauf (1) stammendes Heizungswasser mittels des weiteren elektrischen Nachheizers nachgeheizt wird, und
in der zweiten Erwärmungsstufe das Trinkwasser sanitärseitig des weiteren elektrischen Nachheizers im Wasser-Wasser-Wärmetauscher (22) mittels des nachgeheizten Heizungswassers teilerwärmt wird.

3. Verfahren nach einem der vorstehenden Ansprüche, wobei eine Primärheizungsvorlauftemperatur zwischen 38 °C und 56 °C gehalten wird, insbesondere gleitend.

4. Verfahren nach einem der vorstehenden Ansprüche, wobei eine Primärheizungsrücklauftemperatur zwischen 25 °C und maximal 45 °C gehalten wird, insbesondere variabel.

5. Verfahren nach einem der vorstehenden Ansprüche, wobei das Trinkwarmwasser mit einer vorbestimmten Trinkwarmwassertemperatur bereitgestellt wird, insbesondere 42° C oder 45 °C.

6. Verfahren nach einem der vorstehenden Ansprüche, wobei eine Verbrauchs- und Zustandsgrößenerfassung durchgeführt wird, wobei ermittelte Verbrauchs- und Zustandsgrößen von der Wohnungsstation (3) an eine Steuerung für die Zentralheizung übermittelt werden.

7. Verfahren nach Anspruch 6, wobei die Verbrauchs- und Zustandsgrößenerfassung eine Verbrauchserfassung von Trinkwarmwasser, Trinkkaltwasser und Heizungsverbrauch umfasst.

8. Verfahren nach Anspruch 6 oder 7, wobei die Zentralheizung anhand der übermittelten Verbrauchs- und Zustandsgrößen gesteuert wird.

9. Verfahren nach einem der vorstehenden Ansprüche, wobei zum elektrischen Nachheizer modular ein weiterer Nachheizer in die Wohnungsstation (3) geschaltet wird.

10. Verfahren nach einem der vorstehenden Ansprüche, wobei ein hydraulischer Abgleich über die Wohnungsstation (3) überwacht und gegebenenfalls über einen Stellantrieb geschlossen wird.

11. Haustechniksystem, eingerichtet zum Durchführen eines Verfahrens nach einem oder mehreren der Ansprüche 1 bis 10, wobei die Wohnungsstation (3) wohnungsseitig einer Übergabestelle in der Wohnung angeordnet ist.

12. Haustechniksystem, eingerichtet zum Durchführen eines Verfahrens nach einem oder mehreren der Ansprüche 1 bis 10, wobei die Wohnungsstation (3) heizungs- bzw. netzseitig einer Übergabestelle in der Wohnung angeordnet ist.

13. Haustechniksystem nach Anspruch 11 oder 12, wobei die Wohnungsstation (3) in einem bauseits vorhandenen Schacht untergebracht ist.

14. Haustechniksystem nach einem der Ansprüche 11 bis 13, wobei eine lernfähige Steuerung vorgesehen ist.

15. Haustechniksystem nach einem der Ansprüche 11 bis 14, wobei eine Mehrzahl dezentraler Wohnungsstationen (3) für eine korrespondierende Mehrzahl von Wohnungen vorgesehen ist.

16. Haustechniksystem nach Anspruch 15, wobei die dezentralen Stationen (3) mit einer Heizzentrale mittels eines Datenaustauschers hinsichtlich der Verbräuche von Trinkwarmwasser, Trinkwasser, Heizungsvorlauftemperatur, Heizungsrücklauftemperatur, elektrische Nachheizung, und/oder Volumenströme verknüpft sind.

17. Haustechniksystem nach einem der Ansprüche 11 bis 16, wobei der Heizkreis als ein Einspritzkreis (6) ausgeführt ist.

18. Hybrid-Wohnungsstation (3), aufweisend:
- einen Wasser-Wasser-Wärmetauscher (22),
- einen elektrischen Nachheizer, insbesondere einen Durchlauferhitzer (19, 32), und
- Anschlüsse zum Anschließen der Hybrid-Wohnungsstation (3) an einen Primärheizungsvorlauf (4), einen Primärheizungsrücklauf (14), eine Trinkwasserquelle (20), eine Trinkwarmwasser-Zapfstelle (24), einen Sekundärheizungsvorlauf (4) und einen Sekundärheizungsrücklauf (5) wobei die Hybrid-Wohnungsstation (3) dazu eingerichtet ist, ein Verfahren gemäß einem der Ansprüche 1 bis 10 durchzuführen.

19. Hybrid-Wohnungsstation (3) nach Anspruch 18, weiter aufweisend einem Regler, wobei der Regler (11) den elektrischen Nachheizer ansteuert, um fehlende Energie zum Erreichen der Trinkwarmwassertemperatur bei zu geringer Heizungsvorlauftemperatur mittels elektrischen Nachheizens beizusteuern.

20. Hybrid-Wohnungsstation (3) nach Anspruch 18 oder 19, weiter aufweisend:
- eine Verteilerleitung (2),
- wobei der Primärheizungsvorlauf (1) über die Verteilerleitung (2) innerhalb der Wohnungsstation (3) zu dem Sekundärheizungsvorlauf (4) führt, und
- wobei über den Sekundärheizungsrücklauf (5) benutztes Heizungswasser in die Hybrid-Wohnungsstation (3) einspeisbar ist.

21. Hybrid-Wohnungsstation (3) nach einem der Ansprüche 17 bis 19, wobei der sekundäre Heizkreis als ein Einspritzkreis (6) ausgeführt ist und die Wohnungsstation (3) eine Pumpe (7), ein Zwei-Wege-Ventil (8) und einen Bypass (9) mit Rückschlagventil (10) aufweist, die Teil des sekundären Heizkreises bilden.

22. Wohn-, Büro- und/oder Geschäftsgebäude oder Mehrgebäudekomplex mit einem Haustechniksystem nach einem der Ansprüche 11 bis 17 und/oder mit einer Mehrzahl Hybrid-Wohnungsstationen nach einem der Ansprüche 18 bis 21, wobei die Wohnungen einheitlich oder nicht-einheitlich als Wohn-Wohnungen, als Büros oder als Ladengeschäfte eingerichtet sind.
